# EUROPÄISCHE PATENTSCHRIFT

(11) **EP 1 186 811 B1**
(45) Veröffentlichungstag und Bekanntmachung des Hinweises auf die Patenterteilung: **17.09.2003**
(21) Anmeldenummer: 01810810.0
(22) Anmeldetag: 21.08.2001
(51) Int. Cl.: F16J 15/18

(54) **Dichtungsanordnung**
Sealing arrangement
Dispositif d'étanchéité

(30) Priorität: 12.09.2000 CH 17702000
(43) Veröffentlichungstag der Anmeldung: 13.03.2002
(73) Patentinhaber: Coperion Buss AG, 4133 Pratteln 1 (CH)
(72) Erfinder: Franz, Peter, 5127 Birsfelden (CH); Roese, Bernd, 79594 Inzlingen (DE)
(74) Vertreter: Rottmann, Maximilian R.

(56) Entgegenhaltungen:
- WO-A-94/21944
- FR-A- 2 450 393
- GB-A- 684 373

## Beschreibung

Die Erfindung betrifft eine Dichtungsanordnung nach dem Oberbegriff des Anspruchs 1.

Derartige Dichtungsanordnungen können beispielsweise zum Abdichten von sich drehenden und/oder translatorisch bewegenden Wellen verwendet werden, wie sie beispielsweise in der chemischen, der Kunststoff-, der Nahrungsmittel-, der pharmazeutischen und der Kosmetik-Industrie in Apparaten und Maschinen zum Mischen, Kneten, Plastizieren und Homogenisieren als Arbeitsorgane eingesetzt werden.

Eine grundsätzliche Problematik beim Abdichten von sich drehenden Wellen besteht darin, dass die Wellen immer einen gewissen Unrundlauf, eine Pendelbewegung und eine dynamische Unwucht aufweisen, was sich negativ auf die hier zur Rede stehenden Dichtungsanordnungen auswirkt, da eine in Bezug auf die Welle radiale Relativbewegung zwischen der Welle und den Dichtelementen der Dichtungsanordnung stattfindet, so dass die Dichtelemente stark beansprucht werden. Insbesondere Pendelbewegungen der Welle wirken sich sehr negativ auf die Dichtheit und die Lebensdauer der Dichtungsanordnungen aus.

Diese geschilderte Problematik wird insbesondere bei grossen, schweren, hoch belasteten und sich ggf. auch noch translatorisch bewegenden Wellen zusätzlich akzentuiert.

Um diesen Problemen zu begegnen, wurden auch schon verschiedentlich schwimmende Wellendichtungen eingesetzt, deren mit den Dichtelementen versehene Dichtungsaufnahme schwimmend auf der Welle gelagert ist. Die Problematik bei solchen schwimmenden Wellendichtungen besteht in deren Abstützung mit entsprechend grossem Freiheitsgrad für Pendel- und Taumelbewegungen der Wellen. Dazu wurden bis anhin im allgemeinen elastische Abstützelemente verwendet, welche sowohl radiale Auslenkungen wie auch Pendelbewegungen des Arbeitsorgans aufnehmen bzw. ausgleichen können. Allerdings hat sich gezeigt, dass die Lebensdauer solcher Abstützelemente sehr beschränkt ist, insbesondere auch wenn sie thermisch hoch belastet werden. Zudem können sie nur vergleichsweise geringe Drehmomente aufnehmen und weisen darüberhinaus auch noch relativ hohe Rückstellkräfte auf, was der Lebensdauer der Dichtungen ebenfalls nicht zuträglich ist.

Aus der DE 1 214 199 ist eine Vorrichtung zur Befestigung vertikal rotierender Wellen bekannt. Diese Vorrichtung weist eine schwimmend auf der Welle gelagerte Stopfbüchsenpackung auf, welche die Welle zusammen mit einem beweglichen Faltenbalg, einem Stopfbüchsenkörper sowie einer Stopfbüchsenbrille gegenüber dem Gehäuse abdichtet.

Aus der FR 2 450 393 geht eine Dichtungsanordnung zum Abdichten von sich durch eine Gehäusewandung erstreckenden Wellen hervor. Die Dichtungsanordnung umfasst eine Stopfbüchse, welche schwimmend zwischen dem Gehäuse und der Welle angeordnet ist. Als Verdrehsicherung der Stopfbüchse ist eine im Gehäuse fixierte und in eine Ausnehmung in der Stopfbüchse eingreifende Schraube vorgesehen. Für eine wasserdichte Abdichtung zwischen der Gehäusewandung und der Stopfbüchse ist ein Balgdichtung vorgesehen, welche Relativbewegungen zwischen der schwimmend auf der Welle gelagerten Stopfbüchse und dem Gehäuse aufzunehmen bestimmt ist.

Aus der GB 684 373 ist ein Reaktionsgefäss mit einer drehbar darin angeordneten Misch- und Rühr-Welle bekannt. Zur Abdichtung der aus dem Gehäuse führenden Welle sind auf beiden Seiten des Reaktionsgefässes Dichtungen in Form von Stopfbüchsen angeordnet. Ein Teil der Oberfläche des Stopfbüchsengehäuses weist ein sphärische Oberfläche auf, die in einem ebenfalls eine sphärische Oberfläche aufweisenden und mit dem Reaktionsgefässgehäuse verschweissten Ringelement abgestützt ist. Zum ortsfesten Fixieren der jeweiligen Stopfbüchse ist eine Haltekappe vorgesehen, welche mit dem Gehäuse des Reaktionsgefässes verschraubt ist. Die Haltekappe weist an ihrem oberen Ende eine sphärische Innenfläche auf, in der das Stopfbüchsengehäuse mit einem zweiten ebenfalls sphärisch gestalteten Oberflächeteil abgestützt ist. Diese Gestaltung ermöglicht es, Pendelbewegungen der Welle in Relation zum Reaktionsgefässgehäuse aufzunehmen. Zum Auffüllen eines Zwischenraums zwischen dem Stopfbüchsengehäuse und der Haltekappe sind durch die Haltekappen führende Leitungen vorgesehen

Aus der WO 94 21944 ist schliesslich eine selbstausrichtende und mit einer Stopfbüchse versehene Wellenlagerung bekannt. Die Wellenlagerung weist ein Lagergehäuse auf, das in seinem Innern eine Lagerkammer definiert. Das Lagergehäuse umfasst einen im wesentlichen rohrförmig gestalteten Basisteil und ein damit verschraubtes Verschlusselement. Die Lagerkammer befindet sich zwischen dem äussersten Ende des Basisteils und dem Inneren des Verschlusselements. Die Wellenlagerung weist im weiteren eine Führungsanordnung auf, die mit einem rohrförmigen Innenelement versehen ist, durch das sich die Welle erstreckt. Dieses rohrförmige Innenelement besitzt zwei sich in radialer Richtung erstreckende Flansche die in je einem in der jeweiligen Lagerkammer angeordneten Lagerelement abgestützt sind. Diese Wellenlagerung kann sowohl Dreh- wie auch Hin- und Herbewegungen kontrollieren bzw. aufnehmen.

Ausgehend vom bekannten Stand der Technik besteht die Aufgabe der vorliegenden Erfindung darin, die im Oberbegriff des Anspruchs 1 genannte Dichtungsanordnung mitsamt der Kugelgelenkvorrichtung derart zu gestalten, dass diese einfach aufgebaut ist und kostengünstig hergestellt werden kann und deren Lebensdauer im Hinblick auf ein zuverlässiges und langzeitstabiles Abdichten der Welle optimiert ist.

Diese Aufgabe wird durch die im Kennzeichen des Anspruchs 1 angeführten Merkmale gelöst.

Mit der vorgeschlagenen Dichtungsanordnung können sowohl translatorische Relativbewegungen zwischen der Dichtungsanordnung und der Welle wie auch relative Pendelbewegungen zwischen der Dichtungsanordnung und der Welle weitestgehend vermieden werden. Ausserdem ist die beschriebene Kugelgelenkvorrichtung weitgehend wartungsfrei und Pendelbewegungen der Welle bzw. der schwimmend darauf gelagerten Dichtungsaufnahme werden von der Kugelgelenkvorrichtung aufgenommen und in laterale Bewegungen umgesetzt. Die Kugelgelenkvorrichtung ist zudem einfach aufgebaut, kann kostengünstig realisiert werden, besitzt eine hohe Lebensdauer und ist praktisch wartungsfrei. Zudem besitzt sie vergleichsweise geringe Rückstellkräfte.

Bevorzugte Ausführungsformen der Erfindung sind in den abhängigen Ansprüchen 2 bis 12 umschrieben.

Nachfolgend wird ein bevorzugtes Ausführungsbeispiel der Erfindung anhand von Zeichnungen näher erläutert. In diesen Zeichnungen zeigt:
Figur 1 einen Längsschnitt durch die Dichtungsanordnung mitsamt der Kugelgelenkvorrichtung, und
Figur 2 einen Querschnitt durch die Kugelgelenkvorrichtung.

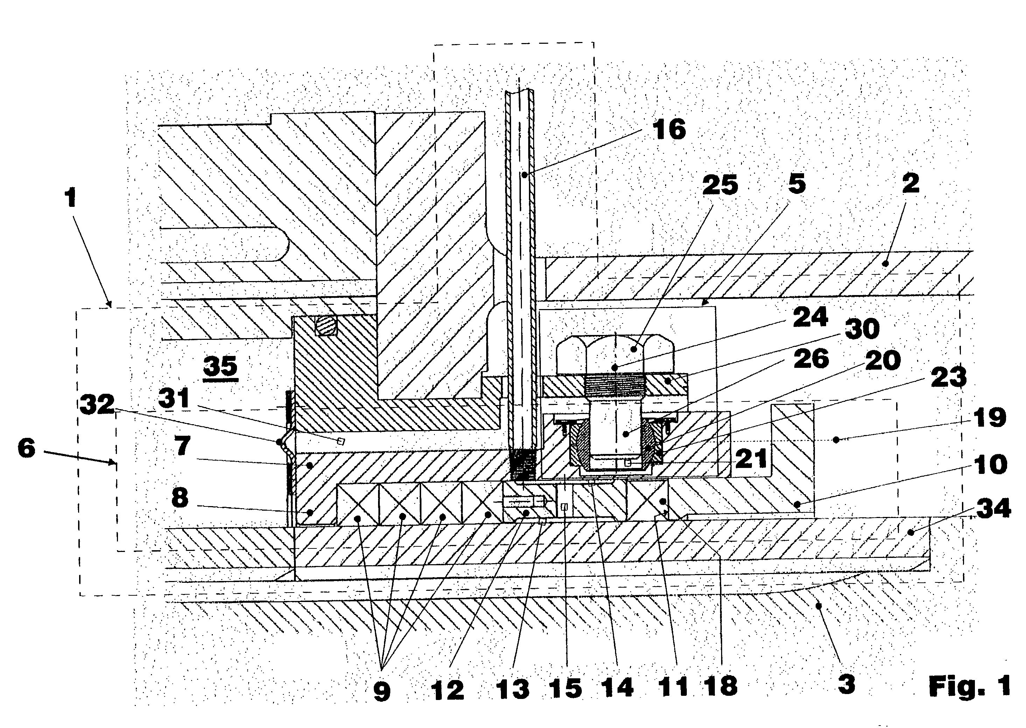

Anhand der Figur 1 wird der Aufbau und die Wirkungsweise der Dichtungsanordnung näher erlautert.

Die gesamthaft mit 1 bezeichnete Dichtungsanordnung ist zwischen einem Maschinen-Gehäuse 2 und einer darin drehbar und/oder translatorisch gelagerten Welle 3 angeordnet. Die Dichtungsanordnung 1 ist mit einer nach dem Stopfbüchsenprinzip ausgebildeten Dichtungsaufnahme 6 versehen, welche der Befestigung von Dichtpackungen 9 dient. Die Dichtungsaufnahme 6 umfasst eine hohlzylindrisch ausgebildete Hülse 7, welche die Welle 3 umschliesst. Die Hülse 7 ist im einen Endbereich mit einem radial nach innen vorstehenden Anschlagbund 8 und im anderen Endbereich mit einem Innengewinde (nicht dargestellt) versehen. Zum Fixieren der Dichtpackungen 9 ist eine mit einem Aussengewinde (nicht dargestellt) versehene Spannbüchse 10 vorgesehen, welche in die Hülse 7 eingeschraubt wird. Zwischen der Stirnseite 11 der Spannbüchse 10 und dem Anschlagbund 8 der Hülse 7 sind vier Dichtpackungen 9 sowie ein Ringelement 12 und eine weitere Dichtpackung und/oder ein Lagerring 18 eingespannt. Die Spannbüchse 10 weist auf einem Lochkreis 19 angeordnete Bohrungen auf, durch welche Gewindebolzen (nicht dargestellt) in den der Spannbüchse 10 gegenüberliegenden Endbereich der Hülse 7 eingeschraubt sind mit deren Hilfe die Dichtpackungen 9 fixierbar und komprimierbar sind.

Zum drehfesten Abstützen der Dichtungsanordnung 1 ist eine Kugelgelenkvorrichtung 5 vorgesehen. Diese besteht aus einer mit einer zentralen Bohrung 21 versehenen Kugel 20, welche in einer in der Hülse 7 befestigten Kugelaufnahme 23 gelagert ist. Die Kugel 20 ist derart angeordnet, dass deren Bohrungsachse 24 im wesentlichen senkrecht zur Längsmittelachse der Welle 3 verläuft. Zum translatorischen Führen der Kugel 20 entlang ihrer Bohrungsachse 24 ist ein in die Kugelbohrung 21 ragendes Führungselement 25 vorgesehen. Das mit einem zylindrischen Vorderteil 26 versehene und als Schraube ausgebildete Führungselement 25 ist in ein Abstützelement 30 eingeschraubt, wobei der Vorderteil 26 des Führungselements 25 aus dem Abstützelement 30 herausragt. Das Abstützelement 30 ist ringförmig ausgebildet und am Gehäuse 2 angeordnet ist.

Die gezeigte Kugelgelenkvorrichtung 5 kann sowohl Schwenkbewegungen wie auch quer zur Längs- bzw. Drehachse der Welle 3 gerichtete, translatorische Bewegungen aufnehmen. Währenddem Pendelbewegungen der Welle 3 durch ein Verdrehen der Kugel 20 in der Kugelaufnahme 23 aufgenommen werden können, führen radiale Auslenkungen der Welle 3, welche insbesondere durch Unrundlauf und dynamische Unwuchten hervorgerufen werden, zu einer translatorischen Relativverschiebung der Kugel 20 gegenüber dem Führungselement 25 entlang der Längsmittelachse 24 der Kugelbohrung 21 bzw. des Führungselements 25. Eine solche Kugelgelenkvorrichtung 5 stellt ein grundsätzlich steifes Element zum drehfesten Abstützen der Dichtungsanordnung 1 dar, wobei letztere schwimmend auf der Welle gelagert werden kann. Dadurch wird der Verschleiss der Dichtungsanordnung 1 und insbesondere auch der Dichtpackungen 9 erheblich verringert, da zwischen den Dichtpackungen 9 und der Welle 3 nur noch Rotations- und ggf. Axialbewegungen stattfinden. Der Gleitwiderstand des zylindrischen Vorderteils 26 in der zentralen Bohrung 21 ist verschwindend gering, was unzulässige Deformationskräfte auf die Dichtpackungen 9 eliminiert. Die Kugelgelenkvorrichtung 5 selber ist, im Gegensatz zu bekannten flexiblen Abstützanordnungen, weitgehend wartungs- und verschleissfrei. Es versteht sich, dass eine in kinematischer Hinsicht umgekehrte Anordnung zwischen der Kugelgelenkvorrichtung 5 und dem Führungselement 25 möglich wäre, indem die Kugelgelenkvorrichtung 5 direkt oder indirekt am Gehäuse 2 und das Führungselement 25 an der Dichtungsanordnung 1 angeordnet ist.

Um einen zwischen der Hülse 7 und dem Abstützelement 30 verlaufenden Ringspalt 31 gegenüber dem Arbeitsraum 35 abdichten zu können, ist eine Membran 32 vorgesehen, welche stirnseitig am Abstützelement 30 und an der Hülse 7 befestigt ist. Der Ringspalt 31 kann zusätzlich oder alternativ zu dieser Membran 32 auch ausgeschäumt werden.

Das Ringelement 12 ist auf der zur Welle 3 gerichteten Innenseite sowie auf der zum Gehäuse 2 gerichteten Aussenseite mit je einer Ausnehmung 13, 14 versehen, wobei zumindest eine die beiden Ausnehmungen 13, 14 miteinander verbindende Bohrung 15 in das Ringelement 12 eingelassen ist. Die Ausnehmungen 13, 14 im Ringelement 12 sind mit einem radial durch das Gehäuse 2 geführten Rohr 16 verbunden. Über dieses Rohr 16 können die Ausnehmungen 13, 14 des Ringelements 12 mit einem flüssigen oder gasförmigen Medium geflutet werden, wodurch die Gefahr eliminiert wird, dass beispielsweise Luftsauerstoff über die Dichtpackungen 9 in den Arbeitsraum 35 gelangen kann.

Der zwischen dem Ringelement 12 und der Spannbüchse 10 eingefügte Lagerring 18 wirkt als Gleitlager, welcher das Mitschwimmen der Dichtungsanordnung auf der Welle 3 begünstigt. Der Lagerring 18 ist vorzugsweise aus einem Kunststoff mit guten selbstschmierenden Eigenschaften gefertigt. An Stelle des oder zusätzlich zum Lagerring 18 können eine oder mehrere Dichtpackungen eingefügt werden, welche das zur Flutung eingesetzte Medium nach aussen hin abdichten.

Um die Abriebfestigkeit der Welle 3 im Bereich der Dichtungsaufnahme 6 bzw. der Dichtpackungen 9 zu erhöhen, ist das Arbeitsorgan 3 mit einem im wesentlichen hohlzylindrisch ausgestalteten Mantel 34 versehen, dessen Oberfläche auf die spezifischen Anforderungen abgestimmt ist.

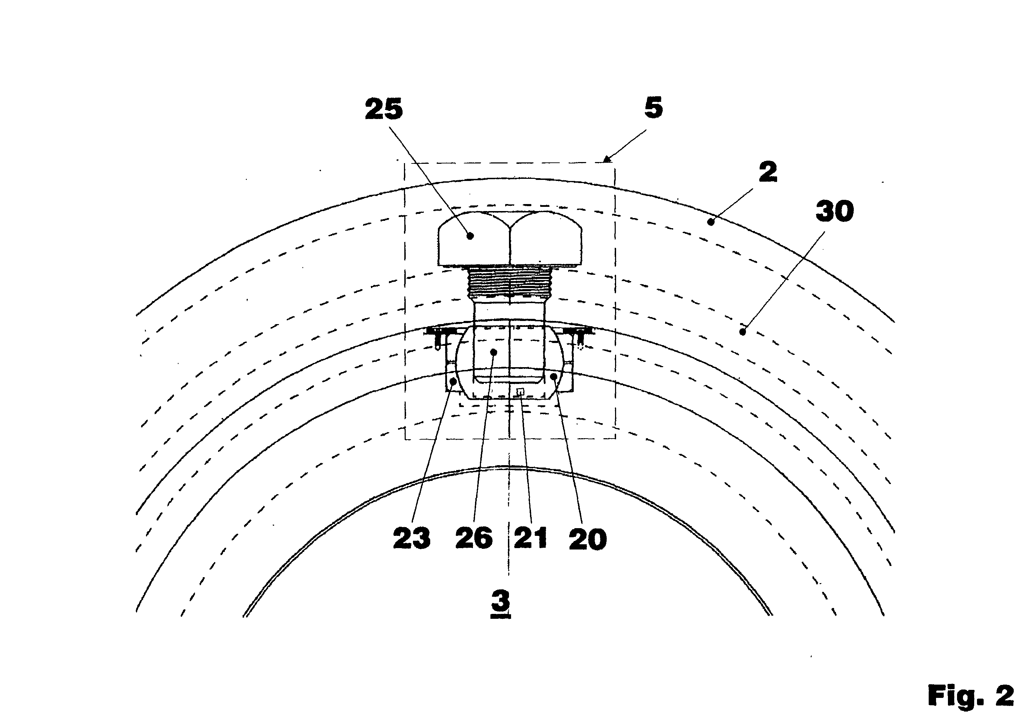

Aus der Figur 2, welche die Kugelgelenkvorrichtung 5 in einem Querschnitt zeigt, sind insbesondere die mit einer zentralen Bohrung 21 versehene Kugel 20, die Kugelaufnahme 23 sowie das in die Kugelbohrung 21 ragende Führungselement 25 ersichtlich.

Mit der geschilderten Erfindung lassen sich eine ganze Reihe von Vorteilen erzielen:
- Die Kugelgelenkvorrichtung kann sowohl radiale Auslenkungen wie auch Pendelbewegungen der Welle aufnehmen.
- Die Kugelgelenkvorrichtung ist thermisch unempfindlich.
- Die Kugelgelenkvorrichtung besitzt vergleichsweise geringe Rückstellkräfte.
- Die Kugelgelenkvorrichtung kann hohe Drehmomente aufnehmen.
- Die Kugelgelenkvorrichtung besitzt eine hohe Lebensdauer und ist praktisch wartungsfrei.
- Die Kugelgelenkvorrichtung ist einfach aufgebaut und kann kostengünstig realisiert werden.
- Die Kugelgelenkvorrichtung lässt sich für horizontal, vertikal oder in einem beliebigen Raumwinkel angeordnete Wellen verwenden.

## Patentansprüche

1. Dichtungsanordnung (1) für in einem Gehäuse (2) rotierende und/oder sich translatorisch bewegende Wellen (3), welche Dichtungsanordnung (1) schwimmend auf der Welle (3) **lagerbar ist** und **eine** Kugelgelenkvorrichtung (5) **aufweist, mit welcher die Dichtungsanordnung (1)** drehfest und/oder in axialer Richtung am Gehäuse **abstützbar** ist, **dadurch gekennzeichnet, dass** die Kugelgelenkvorrichtung (5) eine mit einer zentralen Bohrung (21) versehene Kugel (20) aufweist, welche in einer Kugelaufnahme (23) drehbar gelagert ist, und dass ein in die Kugelbohrung (21) ragendes Führungselement (25) zum translatorischen Führen der Kugel (20) entlang der Bohrungsachse (24) vorgesehen ist, wobei die Bohrungsachse (24) der Kugel (20) im wesentlichen senkrecht zur Längsmittelachse der Welle (3) verläuft.

2. Dichtungsanordnung (1) nach Anspruch 1, **dadurch gekennzeichnet, dass** die Kugel (20) zusammen mit der Kugelaufnahme (23) an einer mit Dichtelementen (9) versehenen Dichtungsaufnahme (6) und das Führungselement (25) direkt oder indirekt am Gehäuse (2) **angeordnet werden kann.**

3. Dichtungsanordnung (1) nach Anspruch 1, **dadurch gekennzeichnet, dass** die Kugel (20) zusammen mit der Kugelaufnahme (23) direkt oder indirekt am Gehäuse (2) **angeordnet werden kann** und das Führungselement (25) an einer mit Dichtelementen (9) versehenen Dichtungsaufnahme (6) angeordnet ist.

4. Dichtungsanordnung (1) nach Anspruch 2 oder 3, **dadurch gekennzeichnet, dass** die Kugel (20) in Relation zum Führungselement (25) oder das Führungselement (25) in Relation zur Kugel (20) in radialer Richtung zur Welle (3) translatorisch verschiebbar ist.

5. Dichtungsanordnung (1) nach Anspruch 2, **dadurch gekennzeichnet, dass** die Dichtungsaufnahme (6) von einem Ringspalt (31) umgeben ist, der mittels einer Membran (32) abgedichtet und/oder ausgeschäumt ist.

6. Dichtungsanordnung (1) nach Anspruch 2, **dadurch gekennzeichnet, dass** ein am Gehäuse (2) **fixierbares** Abstützelement (30) vorgesehen ist, an welchem das in die Kugelbohrung (21) ragende Führungselement (25) fixiert ist.

7. Dichtungsanordnung (1) nach Anspruch 6, **dadurch gekennzeichnet, dass** das Führungselement (25) als Schraube ausgebildet ist, welche in das Abstützelement (30) eingeschraubt ist und auf der Vorderseite mit einem aus dem Abstützelement (30) herausragenden und als Führung der Kugel (20) wirkenden zylindrischen Vorderteil (26) versehen ist.

8. Dichtungsanordnung (1) nach einem der vorhergehenden Ansprüche, **dadurch gekennzeichnet, dass** die Dichtungsaufnahme (6) eine im wesentlichen hohlzylindrisch ausgebildete, die Welle (3) **zu umfassen bestimmte** Hülse (7) aufweist, auf deren Innenseite mehrere **sich** an der Welle (3) **anzulegende** Dichtpackungen (9) angeordnet sind.

9. Dichtungsanordnung (1) nach Anspruch 8, **dadurch gekennzeichnet, dass** die Hülse (7) im einen Endbereich mit einem radial nach innen vorstehenden Anschlagbund (8) und im anderen Endbereich mit einem Innengewinde versehen ist, und dass eine mit einem Aussengewinde versehene Spannbüchse (10) zum Einschrauben in das Innengewinde der Hülse (7) vorgesehen ist, so dass die Dichtpackungen (9) mittels der Spannbüchse (10) zwischen dem Anschlagbund (8) der Hülse (8) und der Stirnseite (11) der Spannbüchse (10) fixierbar und komprimierbar sind.

10. Dichtungsanordnung (1) nach Anspruch 9, **dadurch gekennzeichnet, dass** die Spannbüchse (10) auf einem Lochkreis (19) angeordnete Bohrungen aufweist, durch welche Gewindebolzen in den der Spannbüchse (10) gegenüberliegenden Endbereich der Hülse (7) eingeschraubt sind mit deren Hilfe die Dichtpackungen (9) fixierbar und komprimierbar sind.

11. Dichtungsanordnung (1) nach Anspruch 9 oder 10, **dadurch gekennzeichnet, dass** zwischen der Stirnseite (11) der Spannbüchse (10) und den Dichtpackungen (9) ein mit zumindest einem Hohlraum (13, 14) versehenes Ringelement (12) eingefügt ist, welches auf der zur Welle (3) **zu richtenden** Innenseite sowie auf der **dem** Gehäuse (2) **zuzurichtenden** Aussenseite mit je einer Ausnehmung (13, 14) versehen ist, welche Ausnehmungen (13, 14) mit einer Zufuhrleitung (16) in Verbindung **gebracht werden können,** über die ein flüssiges oder gasförmiges Medium zuführbar ist.

12. Dichtungsanordnung (1) nach einem der vorhergehenden Ansprüche, **dadurch gekennzeichnet, dass** zwischen dem Anschlagbund (8) der Hülse (7) und der Stirnseite (11) der Spannbüchse (10) zumindest eine Dichtpackung (9) und/oder ein Lagerring (18) vorgesehen ist/sind.

## Claims

1. Sealing arrangement (1) for shafts (3) rotating and/or moving in a translatory manner in a housing (2), which sealing arrangement (1) can be mounted in a floating manner on the shaft (3) and has a ball joint device (5), with which the sealing arrangement (1) can be supported in a rotationally fixed manner and/or in the axial direction on the housing, **characterized in that** the ball joint device (5) has a ball (20) which is provided with a central bore (21) and is rotatably mounted in a ball receptacle (23), and **in that** a guiding element (25) protruding into the ball bore (21) is provided for guiding the ball (20) in a translatory manner along the bore axis (24), the bore axis (24) of the ball (20) running substantially perpendicular to the longitudinal centre axis of the shaft (3).

2. Sealing arrangement (1) according to Claim 1, **characterized in that** the ball (20) together with the ball receptacle (23) can be arranged on a seal receptacle (6) provided with sealing elements (9) and the guiding element (25) can be arranged directly or indirectly on the housing (2).

3. Sealing arrangement (1) according to Claim 1, **characterized in that** the ball (20) together with the ball receptacle (23) can be arranged directly or indirectly on the housing (2) and the guiding element (25) is arranged on a seal receptacle (6) provided with sealing elements (9).

4. Sealing arrangement (1) according to Claim 2 or 3, **characterized in that** the ball (20) is displaceable in a translatory manner in relation to the guiding element (25) or the guiding element (25) is displaceable in a translatory manner in relation to the ball (20) in the radial direction with respect to the shaft (3).

5. Sealing arrangement (1) according to Claim 2, **characterized in that** the seal receptacle (6) is surrounded by an annular gap (31), which is sealed by means of a membrane (32) and/or is foam-filled.

6. Sealing arrangement (1) according to Claim 2, **characterized in that** a supporting element (30) which can be fixed on the housing (2) is provided, on which supporting element the guiding element (25) protruding into the ball bore (21) is fixed.

7. Sealing arrangement (1) according to Claim 6, **characterized in that** the guiding element (25) is formed as a screw which is screwed into the supporting element (30) and is provided on the front side with a cylindrical front part (26) protruding out of the supporting element (30) and acting as a guide for the ball (20).

8. Sealing arrangement (1) according to one of the preceding claims, **characterized in that** the seal receptacle (6) has a substantially hollow-cylindrically formed sleeve (7), which is intended for enclosing the shaft (3) and on the inner side of which a number of seal packings (9) to be applied to the shaft (3) are arranged.

9. Sealing arrangement (1) according to Claim 8, **characterized in that** the sleeve (7) is provided in one end region with a radially inwardly projecting stop collar (8) and in the other end region with an internal thread, and **in that** a clamping bush (10) provided with an external thread is provided for screwing into the internal thread of the sleeve (7), so that the seal packings (9) can be fixed and compressed by means of the clamping bush (10) between the stop collar (8) of the sleeve (7) and the end face (11) of the clamping bush (10).

10. Sealing arrangement (1) according to Claim 9, **characterized in that** the clamping bush (10) has bores which are arranged on a hole circle (19) and through which threaded bolts are screwed into the end region of the sleeve (7) lying opposite the clamping bush (10), with the aid of which bolts the seal packings (9) can be fixed and compressed.

11. Sealing arrangement (1) according to Claim 9 or 10, **characterized in that** inserted between the end face (11) of the clamping bush (10) and the seal packings (9) is a ring element (12) which is provided with at least one hollow space (13, 14) and is provided on the inner side, to be directed towards the shaft (3), and on the outer side, to be directed towards the housing (2), with a recess (13, 14) in each case, which recesses (13, 14) can be brought into connection with a supply line (16), via which a liquid or gaseous medium can be supplied.

12. Sealing arrangement (1) according to one of the preceding claims, **characterized in that** at least one seal packing (9) and/or a bearing ring (18) is/are provided between the stop collar (8) of the sleeve (7) and the end face (11) of the clamping bush (10).

## Revendications

1. Agencement d'étanchéité (1) pour des arbres (3) qui, dans un boîtier (2), tournent et/ou se déplacent en translation, lequel agencement d'étanchéité (1) peut être monté flottant sur l'arbre (3) et comprend un dispositif d'articulations sphérique (5) au moyen duquel l'agencement d'étanchéité (1) est fixe en rotation et/ou peut être mis en appui suivant la direction axiale sur le boîtier, **caractérisé en ce que** le dispositif d'articulation sphérique (5) comprend une rotule (20) qui présente un perçage central (21) et qui est montée rotative dans un logement de rotule (23), et **en ce qu'**il est prévu un élément de guidage (25) qui pénètre dans le perçage de rotule (21) et sert au guidage en translation de la rotule (20) le long de l'axe de perçage (24), l'axe de perçage (24) de la rotule (20) s'étendant d'une manière essentiellement perpendiculaire à l'axe central longitudinal de l'arbre (3).

2. Agencement d'étanchéité (1) suivant la revendication 1, **caractérisé en ce que** la rotule (20) peut être disposée, en commun avec le logement de rotule (23), sur un logement d'étanchéité (6) pourvu d'éléments d'étanchéité (9) et l'élément de guidage (25) peut être disposé directement ou indirectement sur le boîtier (2).

3. Agencement d'étanchéité (1) suivant la revendication 1, **caractérisé en ce que** la rotule (20) peut être disposée, en commun avec le logement de rotule (23), directement ou indirectement sur le boîtier (2) et l'élément de guidage (25) est disposé sur un logement d'étanchéité (6) pourvu d'éléments d'étanchéité (9).

4. Agencement d'étanchéité (1) suivant la revendication 2 ou 3, **caractérisé en ce que** la rotule (20) est déplaçable en translation vis-à-vis de l'élément de guidage (25) ou l'élément de guidage (25) est déplaçable en translation vis-à-vis de la rotule (20), suivant la direction radiale vis-à-vis de l'arbre (3).

5. Agencement d'étanchéité (1) suivant la revendication 2, **caractérisé en ce que** le logement d'étanchéité (6) est entouré par un intervalle annulaire (31) dont l'étanchéité est assurée au moyen d'un diaphragme (32) et/ou qui est rempli par formation de mousse.

6. Agencement d'étanchéité (1) suivant la revendication 2, **caractérisé en ce qu'**il est prévu un élément d'appui (30) qui peut être fixé sur le boîtier (2) et sur lequel l'élément de guidage (25) pénétrant dans le perçage de rotule (21) est fixé.

7. Agencement d'étanchéité (1) suivant la revendication 6, **caractérisé en ce que** l'élément de guidage (25) est réalisé sous forme d'une vis qui est vissée dans l'élément d'appui (30) et, du côté avant, est pourvue d'une partie avant (26) cylindrique qui fait saillie hors de l'élément d'appui (30) et sert de guide à la rotule (20).

8. Agencement d'étanchéité (1) suivant l'une des revendications précédentes, **caractérisé en ce que** le logement d'étanchéité (6) comprend un manchon (7) qui est réalisé d'une manière essentiellement cylindrique creuse et est destiné à entourer l'arbre (3) et sur la face intérieure duquel sont disposées plusieurs garnitures d'étanchéité (9) devant s'appliquer sur l'arbre (3).

9. Agencement d'étanchéité (1) suivant la revendication 8, **caractérisé en ce** le manchon (7) est pourvu, dans une première zone d'extrémité, d'une collerette de butée (8) faisant saillie radialement vers l'intérieur et, dans l'autre zone d'extrémité, d'un filetage intérieur, et en se qu'il est prévu une bague de serrage (10) pourvue d'un filetage extérieur et destinée à se visser dans le filetage intérieur du manchon (7), de sorte que les garnitures d'étanchéité (9) peuvent être immobilisées et être comprimées au moyen de la douille de serrage (10) entre la collerette de butée (8) du manchon (8) et la face frontale (11) de la douille de serrage (10).

10. Agencement d'étanchéité (1) suivant la revendication 9, **caractérisé en ce que** la douille de serrage (10) comporte des perçages qui sont disposés sur un cercle de trous (19) et dans lesquels sont vissés, dans la zone d'extrémité du manchon (7) située à l'opposé de la douille de serrage (10), des boulons filetés au moyen desquels les garnitures d'étanchéité (9) peuvent être immobilisées et être comprimées.

11. Agencement d'étanchéité (1) suivant la revendication 9 ou 10, **caractérisé en ce qu'**entre la face frontale (11) de la douille de serrage (10) et les garnitures d'étanchéité (9), il est inséré un élément annulaire (12) qui présente au moins un évidement (13, 14) et qui est pourvu, respectivement sur la face intérieure tournée vers l'arbre (3) et sur la face extérieure devant être tournée vers le boîtier (2), d'un évidement (13, 14) respectif, lesquels évidements (13, 14) peuvent être amenés à communiquer avec une conduite d'acheminement (16) par laquelle un fluide liquide ou gazeux peut être acheminé.

12. Agencement d'étanchéité (1) suivant l'une des revendications précédentes, **caractérisé en ce qu'**au moins une garniture d'étanchéité (9) et/ou un anneau d'appui (18) est/sont prévus entre la collerette de butée (8) du manchon (7) et la face frontale (11) de la douille de serrage (10).
